# EUROPEAN PATENT SPECIFICATION

(11) **EP 4 249 300 B1**
(45) Date of publication and mention of the grant of the patent: **28.10.2026**
(21) Application number: 21877257.2
(22) Date of filing: 27.08.2021
(51) Int. Cl.: B60K 1/04, B62D 21/02, H01M 50/20, B60L 3/00, B60L 50/64, H01M 50/249, B60L 50/60, B62D 21/09, H01M 50/262

(54) **SUPPORT DEVICE FOR BATTERY PACK, AND ELECTRIC TRUCK**
TRÄGERVORRICHTUNG FÜR BATTERIEPACK UND ELEKTRISCHER LASTKRAFTWAGEN
DISPOSITIF DE SUPPORT POUR BLOC-BATTERIE, ET CAMION ÉLECTRIQUE

(30) Priority: 09.10.2020 JP 2020171501
(43) Date of publication of application: 27.09.2023
(73) Proprietor: Daimler Truck AG, 70771 Leinfelden-Echterdingen (DE)
(72) Inventor: KUMAGAI, Naotatsu, Kawasaki-shi, Kanagawa 211-8522 (JP)
(74) Representative: Hofstetter, Schurack & Partner
(86) International application number: PCT/JP2021/031463
(87) International publication number: WO 2022/074954

(56) References cited:
- EP-A1- 4 368 455
- WO-A1-2021/108429
- CN-A- 102 582 457
- CN-A- 103 779 514
- CN-U- 204 323 022
- CN-U- 211 223 010
- DE-A1- 102008 061 493
- DE-A1- 102018 202 190
- US-A1- 2020 259 143
- US-B1- 10 493 837
- US-B2- 6 547 020

## Description

### [Technical Field]

The present disclosure relates to a support apparatus that supports a battery pack for driving a vehicle, and to an electric truck provided with the support apparatus.

### [Background Technique]

Conventionally, from the viewpoint of reducing environmental loads, electric vehicles, such as electric vehicles or hybrid vehicles, have been developed which travel by supplying electric power of a driving battery to a motor. In recent years, electric vehicles have also been developed in the field of commercial vehicles such as trucks (see, for example, Patent Document 1). From the aspect of cost reduction, application of a general-purpose battery pack, which has been used for a passenger vehicle, to an electric commercial vehicle has been examined.

### [Prior Art Documents]

### [Patent Document]

[Patent Document 1] Japanese Laid-Open Patent Publication No. 2016-113063
[Patent Document 2] Chinese utility model CN 204 323 022 U.

### [Summary of Invention]

### [Problem to be Solved by Invention]

However, since a battery pack for a passenger vehicle is assumed to be mounted inside the vehicle body, the casing of the battery pack has a relatively low load bearing strength. On the other hand, since high impact load may be applied to a battery pack of a commercial vehicle such as a truck, which battery pack is arranged under the ladder frame, in the event of a side collision, the support apparatus that supports the battery pack requires a high load bearing strength.

In a typical vehicle provided with a ladder frame, space on the side (outside in the vehicle width direction) of the ladder frame between the wheelbase is used for mounting various on-board devices such as a low-voltage battery and a side sensor. In contrast to the above, in cases where a battery pack is arranged under the ladder frame, the battery pack reduces a space for mounting on-board devices, so that the mountability of such an on-board device may be lowered.

With the foregoing problems in view, one of the objects of the present disclosure is to ensure the mountability of an on-board device while enhancing the protectability of the battery pack in case of a side collision.

### [Means to Solve the Problem]

The present disclosure has been developed in order to solve at least part of the above objects, and can be achieved in the form of the following embodiment or application example.
(1) A support apparatus for a battery pack according to this application example is for the battery pack being mounted under side rails constituting a ladder frame of a vehicle and including a pair of side faces, the side faces facing outward in a vehicle width direction and being positioned on outsides in the vehicle width direction with respect to the side rails, the support apparatus including: a battery-side bracket that includes an opposing face facing the side faces and accommodates the battery pack; and a frame-side bracket coupling the battery-side bracket to the side rails, wherein the battery-side bracket includes a device mounting unit for mounting an on-board device at an outer face opposite to the opposing face.

With this support apparatus for a battery pack, since the impact load input from the outside in the vehicle width direction in case of a side collision is input into the on-board device before being input into the battery-side bracket, the initial input of the impact load is absorbed by the on-board device. This reduces the impact load to be transmitted to the battery-side bracket, so that the impact load to be transmitted to the battery pack through the battery-side bracket is also reduced. Consequently, the protectability of the battery pack in a side collision can be enhanced.

In addition, since the presence of the device mounting unit makes it possible to mount the on-board device on the outer face of the battery-side bracket, the mountability of the on-board device can be ensured.

(2) In the support apparatus for the battery pack according to this application example, the device mounting unit may include: a weld bolt having a head portion being welded to the opposing face and a screw portion protruding from the head portion outward in the vehicle width direction further than the outer face.

The device mounting unit including the weld bolt makes it possible to mount the on-board device on the device mounting unit simply by fastening a nut to the weld bolt from the outside in the vehicle width direction. This further enhances the mountability of the on-board device.

The screw portion protruding from the head portion welded to the opposing face toward the outer side in the vehicle width direction further than the outer face has a protruding end directing outward in the vehicle width direction, and therefore the protruding end can be avoided from interfering with the battery pack. This further enhances the protectability of the battery pack in the event of a side collision.

(3) In the support apparatus according to this application example, the device mounting unit may include: a weld nut welded to the opposing face.

The device mounting unit including the weld nut makes it possible to mount the on-board device on the device mounting unit simply by fastening a weld bolt to the weld nut from the outside in the vehicle width direction. This further enhances the mountability of the on-board device.

(4) In the support apparatus according to this application example, the battery-side bracket may include a successive face being provided successively to the outer face and forming a corner portion in conjunction with the outer face; and the device mounting unit may be formed on the corner portion provided from the outer face to the successive face.

The device mounting unit formed on the corner portion provided from the outer face to the successive face of the battery-side bracket makes it possible to mount the on-board device on the corner portion having a relatively high stiffness in the battery-side bracket. With this structure, the installing strength of the on-board device to the device mounting unit can be ensured while simplifying the structure to install the on-board device to the device mounting unit.

By mounting the on-board device on the successive face as well as on the outer face of the battery-side bracket, the impact load input into the on-board device in a side collision is easily transmitted also to the successive face. This inhibits the deformation of the outer face on the collision side of the battery-side bracket, so that the protectability of the battery pack in the side collision can be further enhanced.

(5) An electric truck according to this application example includes a support apparatus for a battery pack defined in any one of the above features (1) - (4).

Like the above feature (1), this configuration can ensure the protectability of the battery pack in a side collision while enhancing the mountability of the on-board device.

(6) In the electric truck according to this application example, the on-board device may include a casing provided with a charging opening for charging the battery pack from outside.

In such an electric truck in which the casing is mounted on the device mounting unit, the charging opening of the casing can be easily arranged on the outer side in the vehicle width direction as compared with a structure that mounts the casing on the side rail. This makes it possible to arrange the casing at a predetermined position without extending a dedicated bracket for arranging the casing at the predetermined position from the side rail, so that the workability of supplying electricity to the charging opening can be ensured while reducing the number of components and simplifying the structure.

(7) In the electric truck according to this application example, the on-board device may include a sensor that detects an object being outside in the vehicle width direction.

In such an electric truck in which the sensor is mounted on the device mounting unit, the sensor can be easily arranged on the outer side in the vehicle width direction as compared with a structure that mounts the sensor on the side rail. This makes it possible to arrange the sensor at a predetermined position without extending a dedicated bracket for arranging the sensor at the predetermined position from the side rail, so that the detection area of the sensor can be appropriately set while reducing the number of components and simplifying the structure.

### [Effect of Invention]

According to the present disclosure, the mountability of the on-board device can be ensured while enhancing the protectability of the battery pack in case of a side collision.

### [Brief Description of Drawings]

[FIG. 1] FIG. 1 is a top view of a main part of an electric truck to which a support apparatus for a battery pack according to an embodiment is applied;
[FIG. 2] FIG. 2 is an exploded perspective view of the battery pack and a battery-side bracket applied to the electric truck of FIG. 1;
[FIG. 3] FIG. 3 is a sectional diagram schematically showing an example of a device mounting unit of the support apparatus of FIG. 1;
[FIG. 4] FIG. 4 is a sectional diagram schematically showing another example of the device mounting unit of the support apparatus of FIG. 1; and
[FIG. 5] FIG. 5 is a sectional diagram schematically showing the structure and the effect of the device mounting unit of the support apparatus of FIG. 1.

### [Embodiment to Carry out Invention]

Referring to the drawings, embodiments of the present disclosure will now be described. The following embodiments are illustrative only and are not intended to preclude the application of various modifications and techniques not explicitly set forth therein. The configurations of the following embodiments may be variously modified and implemented without departing from the scope thereof. Also, the configurations can be selected as necessary, or can be combined in an appropriate manner.

### [1. Configuration]

### [1-1. Overall Configuration]

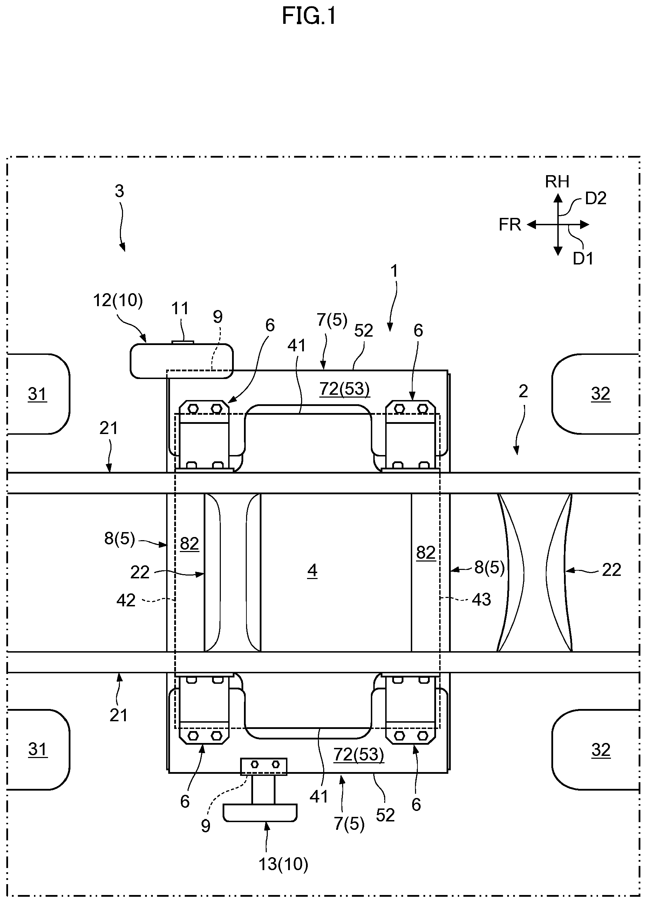

As shown in FIG. 1, a support apparatus 1 for a battery pack (hereinafter, simply referred to as a support apparatus 1) according to the present embodiment is mounted on an electric truck (vehicle) 3 provided with a ladder frame 2. The electric truck 3 is an electric vehicle (electric automobile, hybrid vehicle) that travels by supplying electric power of a battery pack 4 for driving to a non-illustrated motor.

Hereinafter, the front-rear direction of the electric truck 3 is also referred to as a vehicle length direction D1, and the right-left direction of the electric truck 3 is also referred to as a vehicle width direction D2. A vertical direction orthogonal to both the front-rear direction and the left-right direction is also referred to as a vehicle height direction D3. In the drawings, the front side is indicated by "FR"; the right side is indicated by "RH"; and the upper side is indicated by "UP". Incidentally, FIG. 1 shows a lower structure of the electric truck 3, but omits the upper structure (body) disposed above the ladder frame 2.

The ladder frame 2 is a component which forms a skeleton of the electric truck 3 and has high stiffness and strength. The ladder frame 2 includes a pair of side rails 21 extending in the vehicle length direction D1, and multiple cross members 22 extending in the vehicle width direction D2 to connect the side rails 21 to each other.

The pair of side rails 21 are arranged apart from each other in the vehicle width direction D2. Each side rail 21 has a channel-like shape (U-shaped cross section) in which a pair of plate-like flange portions extend inward in the vehicle width direction D2 from the upper and the lower edges of the plate-like web portion extending along the vehicle length direction D1 and the vehicle height direction D3.

The multiple cross members 22 are disposed apart from each other in the vehicle length direction D1. Here, two cross members 22 are illustrated, which are disposed at two positions of: a position overlapping the battery pack 4 in the vehicle height direction D3; and a position to the rearward of the battery pack 4.

The battery pack 4 is, for example, a general-purpose high-voltage battery pack usable in a passenger car. In the electric truck 3, the battery pack 4 is mounted under the pair of side rails 21 and protrudes outward in the vehicle width D2 further than the side rails 21. Here, the illustrated battery pack 4 has a box shape having a dimension in the vehicle height direction D3 smaller (thinner) than the dimensions in the vehicle length direction D1 and the dimension in the vehicle width direction D2. However, the shape of the battery pack 4 is not particularly limited.

The battery pack 4 has a pair of side faces 41 (hereinafter, also referred to as battery side-faces 41) facing outward in the vehicle width direction D2. The pair of battery side-faces 41 are respectively positioned on outsides in the vehicle width direction D2 with respect to the pair of side rails 21. More specifically, the right battery side-face 41 is positioned on the right side of the right side rail 21 and the left battery side-face 41 is positioned on the left side of the left side rail 21.

Since the battery side-faces 41 are arranged outside in the vehicle width direction D2 of the side rails 21 as described above, the dimension of the battery pack 4 in the vehicle width direction D2 is reserved to be larger than the distance between the web portions of the side rails 21. Thus, the storage capacity of the battery pack 4 can be increased.

Also, the battery pack 4 is preferably arranged over a wide area of the wheelbase (the distance between the front axle and the rear axle) in order to ensure the cruising range of the electric truck 3. The present embodiment illustrates, in a relatively small electric truck 3 (having a relatively short wheelbase), an example in which one battery pack 4 is disposed over almost the entire wheelbase. Therefore, front wheels 31 are disposed close to the front of the battery pack 4, and rear wheels 32 are disposed close to the rear of the battery pack 4.

The size of the electric truck 3 and the number of battery packs 4 are not limited to those exemplified in the present embodiment. In a relatively large electric truck 3 (i.e., having a relatively long wheelbase), multiple battery packs 4 may be arranged side by side in the vehicle length direction D1. Also in this case, by arranging multiple battery packs 4 over a wide area of the wheelbase, the multiple battery packs 4 as a whole can be made to have a larger capacity and thereby ensure the cruising range.

The support apparatus 1 couples the battery pack 4 to the side rails 21 and supports the battery pack 4. In other words, the battery pack 4 is supported by the side rails 21 via the support apparatus 1. In the present embodiment, the support apparatus 1 is assumed to be configured bilaterally symmetrically with respect to the vehicle width direction D2 except for a device mounting unit 9 to be described below.

The support apparatus 1 includes a battery-side bracket 5 that accommodates the battery pack 4 and frame-side brackets 6 that couple the battery-side bracket 5 and the side rails 21 to each other. The battery-side bracket 5 is an outer wall body disposed on the outer circumference of the battery pack 4 and has a function of protecting the battery pack 4 from impact loads. On the other hand, the frame-side brackets 6 extend outward in the vehicle width direction D2 and downward from the side rails 21, and have a function of suspending the battery pack 4 accommodated in the battery-side bracket 5 from the side rails 21.

The battery-side bracket 5 of the present embodiment includes: a pair of end cross members 7 disposed on the outside in the vehicle width direction D2 (left and right) of the battery pack 4; and a pair of main members 8 disposed on the outside in the vehicle length direction D1 (front and rear) of the battery pack 4. The battery-side bracket 5 is arranged, with these end cross members 7 and the main members 8, so as to surround the four sides of the battery pack 4.

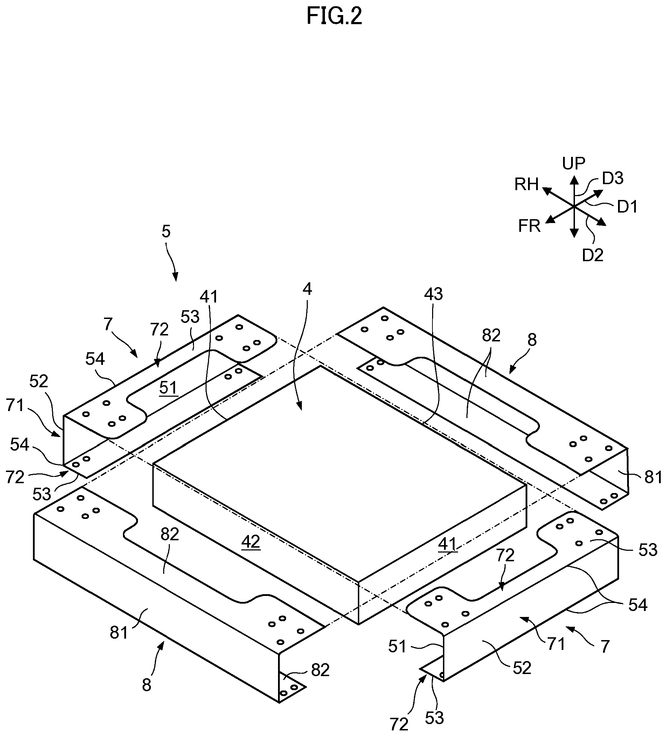

The pair of end cross members 7 are formed similarly (left-right symmetrically) to each other except for the device mounting unit 9. Likewise, the pair of main members 8 are formed similarly (front-back symmetrically) to each other. As shown in FIG. 2, both the end cross members 7 and the main members 8 of the present embodiment are formed of steel plates and formed into channel shapes. Incidentally, FIG. 2 omits illustration of the device mounting unit 9.

Each end cross member 7 has a web portion 71 arranged along the battery side-face 41 and a pair of flange portions 72 respectively protruding from the upper and the lower edges of the web portion 71 toward the battery pack 4 (inward in the vehicle width direction D2). By arranging the web portion 71 spaced from the corresponding battery side-face 41 (with a gap), each end cross members 7 of the present embodiment can reserve deformation allowance (absorbing allowance of the impact load) in the event of a possible collision.

The web portion 71 of each end cross member 7 serves as an opposing face 51 facing the battery side-face 41 and an outer face 52 on the opposite side of the opposing face 51. More specifically, the opposing face 51 is the inner face (the face facing inward in the vehicle width direction D2) of each web portion 71 of the end cross member 7, and the outer face 52 is the outer face (the face facing outward in the vehicle width direction D2) of the web portion 71 of the end cross member 7.

In the present embodiment, since the web portion 71 of each end cross member 7 is spaced apart from the battery side-face 41 as described above, the opposing face 51 is not in contact with the battery side-face 41. Alternatively, the opposing face 51 (i.e., the web portion 71 of the end cross member 7) may be arranged in contact with the battery side-face 41.

Each flange portion 72 of each end cross member 7 serves as a successive face 53 provided successively to the outer face 52 in the battery-side bracket 5. More specifically, the successive face 53 is an outer face (i.e., the face facing outward in the vehicle height direction D3) of the flange portion 72 of each end cross member 7. The successive face 53 forms a corner portion 54 in conjunction with the outer face 52. The present embodiment illustrates the upper and the lower successive faces 53 that form substantially right-angle corner portions 54 at positions corresponding to the upper and the lower edges of the outer face 52, respectively.

Each main member 8 has: a web portion 81 arranged along the front face 42 or the rear face 43 of the battery pack 4; and a pair of flange portions 82 protruding from the upper edge and the lower edge of the web portion 81 toward the battery pack 4 (i.e., inward in the vehicle length direction D1). The flange portions 82 of each main member 8 is overlaid on the battery pack 4 side (inside in the vehicle height direction D3) than the flange portions 72 of the end cross members 7, and are coupled to the flange portions 72 of the end cross members 7 by non-illustrated fasteners.

As shown in FIG. 1, the frame-side brackets 6 are fixed to portions where the upper flange portions 72 and 82 of the end cross members 7 and the main members 8 overlap. The frame-side brackets 6 are also fixed to the web portions of the side rails 21. Here, an example is illustrated in which the two frame-side brackets 6 are provided to each of the left and the right sides (i.e., the outside in the vehicle width direction D2 of each side rail 21) of the electric truck 3 (four frame-side brackets 6 in total).

### [1-2. Configuration of Main Parts]

The battery-side bracket 5 includes the device mounting unit 9 which mounts an on-board device 10 on the outer face 52. The device mounting unit 9 is a portion to which the on-board device 10 is mounted and has a structure capable of mounting the on-board device 10.

The device mounting unit 9 is set at a part of at least the outer face 52 of the battery-side bracket 5. The present embodiment illustrates two device mounting units 9 set in areas including portions of the left and the right outer faces 52. However, the specific positions of and the number of device mounting units 9 are not limited to the example of the present embodiment.

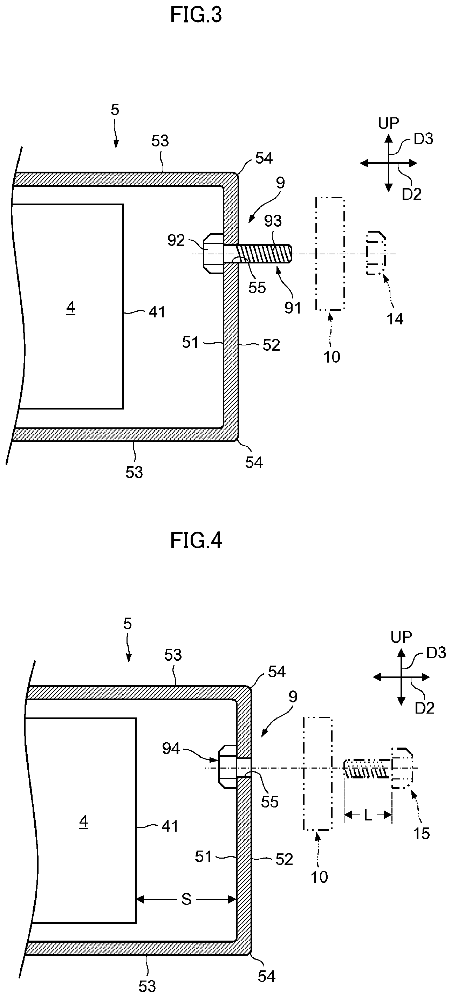

As shown in FIGS. 3 and 4, each device mounting unit 9 may include a weld bolt 91 and/or a weld nut 94 for installing the on-board device 10 to the outer face 52 of the battery-side bracket 5.

As shown in FIG. 3, the weld bolt 91 has a head portion 92 welded to the opposing face 51 and a screw portion 93 protruding outward in the vehicle width direction D2 from the head portion 92 further than the outer face 52. In detail, the weld bolt 91 is fixed to the opposing face 51 in a state where the screw portion 93 thereof is inserted into a hole portion 55, which penetrates a portion (in the present embodiment the web portion 71 of the end cross member 7) between the opposing face 51 and the outer face 52 of the battery-side bracket 5, from inside in the vehicle width direction D2.

The screw portion 93 of the weld bolt 91 is fastened to a nut 14 after being inserted into a through-hole (not shown) formed on the on-board device 10 (or its bracket, for example). This installs the on-board device 10 to the device mounting unit 9 including the weld bolt 91.

As shown in FIG. 4, the weld nut 94 is welded to the opposing face 51. More specifically, the weld nut 94 is fixed to the opposing face 51 while being positioned coaxially with the hole portion 55.

The weld nut 94 is fastened to a bolt 15 inserted from the outside of the vehicle width direction D2 to a through-hole (not shown) formed on the on-board device 10 (or the bracket thereof, for example). This installs the on-board device 10 to the device mounting unit 9 including the weld nut 94. Incidentally, the bolt 15 which is fastened to the weld nut 94 is set to have the length size L of the screw portion to be sufficiently shorter than the distance (gap) S between the battery side-face 41 and the opposing face 51 (L<S) in order to avoid interference with the battery pack 4.

The method of mounting the on-board device 10 on the device mounting unit 9 is not limited to the above method using the weld bolt 91 and the weld nut 94, and various known methods can be applied. Alternatively, the on-board device 10 may be mounted on the device mounting unit 9 by a conventional bolt or nut (not shown) that are not welded to the opposing face 51. Further alternatively, the on-board device 10 may be welded directly to the device mounting unit 9.

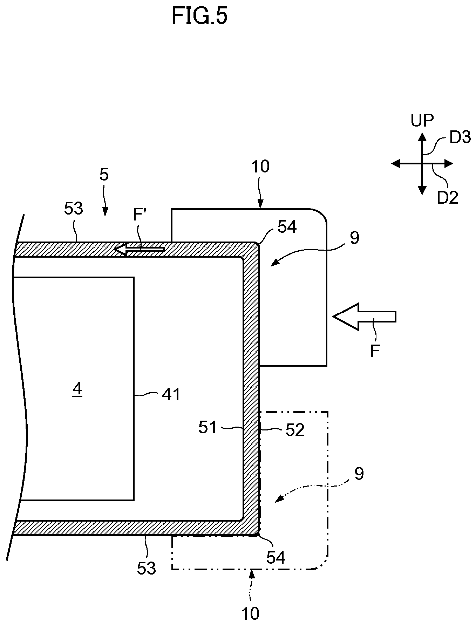

As shown in FIG. 5, the device mounting unit 9 of the present embodiment is provided on the corner portion 54 that spans from the outer face 52 to the successive face 53 of the battery-side bracket 5. In other words, the device mounting unit 9 is set over a part of the outer face 52 and a part of the successive face 53. Here, the device mounting unit 9 provided on the upper corner portion 54 is illustrated.

The on-board device 10 (or its brackets, for example) mounted on the device mounting unit 9 provided on the corner portion 54 is arranged on the outer side of the corner portion 54 so as to cover the corner portion 54. In FIG. 5, the specific structure of the device mounting unit 9 (i.e., the weld bolt 91 and/or the weld nut 94, for example) is omitted and the on-board device 10 is simplified.

As shown in FIG. 1, the on-board device 10 of the present embodiment includes: a casing 12 provided with a charging opening 11 for charging the battery pack 4 from outside; and a sensor 13 that detects an object being outside in the vehicle width direction D2. Here, the example is assumed that the casing 12 is mounted on the right device mounting unit 9 and the sensor 13 is mounted on the left device mounting unit 9. Both the casing 12 and the sensor 13 are provided so as to protrude outward in the vehicle width direction D2 further than the outer face 52 of the battery-side bracket 5.

The casing 12, which is also referred to as a Charge Inlet Box (CIB), is provided at a predetermined position where the charging opening 11 can be accessed from the outside of the electric truck 3. In the casing 12, the charging opening 11 is disposed facing outward in the vehicle width direction D2.

An example of the sensor 13 is a radar or camera applied to a technique (so-called blind spot assist) of detecting an object existing in a blind spot of the electric truck 3 and inform the driver of the detected object. The sensor 13 is disposed at a predetermined position where the blind spot can be the detection range.

### [2. Actions and Effects]

(1) According to the support apparatus 1, since the device mounting unit 9 that mounts the on-board device 10 is provided on the outer face 52 of the battery-side bracket 5, the impact load F input from the outside in the vehicle width direction D2 in the event of a side collision is input into the on-board device 10 before being input into the battery-side bracket 5, as shown in FIG. 5. This allows the initial input of the impact load F to be absorbed at the on-board device 10 before being absorbed at the battery-side bracket 5. Consequently, since it is possible to reduce the impact load F to be transmitted to the battery-side bracket 5, the impact load F to be transmitted to the battery pack 4 through the battery-side bracket 5 can also be reduced. Therefore, the protectability of the battery pack 4 can be enhanced in case of a side collision.

Further, in the electric truck 3, the battery pack 4 is mounted under the side rails 21 and the battery-side faces 41 are positioned on outsides in the vehicle width direction D2 of the side rail 21, the capacity of the battery pack 4 can be increased. On the other hand, since the battery pack 4 protrudes outward in the vehicle width direction D2 of the side rails 21, the mountability of the on-board device 10 onto the side rails 21 may be lowered. In contrast, according to the above device mounting unit 9, since the on-board device 10 is mounted on the outer face 52 of the battery-side bracket 5, the mountability of on-board device 10 can be ensured.

(2) As shown in FIG. 3, according to the device mounting unit 9 including the weld bolt 91, the on-board device 10 can be mounted on the device mounting unit 9 only by fastening the nut 14 to the weld bolt 91 from the outside in the vehicle width direction D2. Therefore, the mountability of the on-board device 10 can be further enhanced.

Furthermore, since the screw portion 93, which protrudes outward in the vehicle width direction D2 further than the outer face 52 from the head portion 92 welded to the opposing face 51, has a protruding end pointing outward in the vehicle width direction D2, the screw portion 93 can avoid interference with the battery pack 4. Therefore, even if the weld bolt 91 is displaced to the inside (toward the battery pack 4) in the vehicle width direction D2 in the event of a side collision, the screw portion 93 of the weld bolt 91 and the battery pack 4 can be prevented from being brought into contact with each other. Consequently, the protectability of the battery pack 4 can be further enhanced in the event of a side collision.

(3) As shown in FIG. 4, according to the device mounting unit 9 including the weld nut 94, simply fastening the bolt 15 to the weld nut 94 from the outside in the vehicle width direction D2 makes it possible to mount the on-board device 10 on the device mounting unit 9. Therefore, the mountability of the on-board device10 can be further enhanced.

Further, under the state where the length size L of the screw portion of the bolt 15 to be fastened to the weld nut 94 is set to be sufficiently shorter than the distance S between the battery side-face 41 and the opposing face 51, even if the bolt 15 is displaced inward in the vehicle width direction D2 (toward the battery pack 4) in the event of a side collision, the contact of the bolt 15 with the battery pack 4 can be easily avoided. Therefore, the protectability of the battery pack 4 in the event of a side collision can be ensured.

(4) As shown in FIG. 5, according to the device mounting unit 9 formed on the corner portion 54 provided from the outer face 52 to the successive face 53 of the battery-side bracket 5, the on-board device 10 can be mounted on the corner portion 54, which has a relatively high rigidity in the battery-side bracket 5. Therefore, while simplifying the structure to install the on-board device 10 on the device mounting unit 9, it is possible to secure the installing strength of the on-board device 10 to the device mounting unit 9. For example, it is possible to stably fix the on-board device 10 to the device mounting unit 9 even with a limited number of bolts for mounting the on-board device 10 to the device mounting unit 9.

Further, according to the device mounting unit 9 provided to the corner portion 54 described above, since the on-board device 10 is mounted also on the successive face 53, the impact load F inputted into the on-board device 10 in the event of a side collision is easily transmitted to the successive face 53 as well as to the outer face 52. Since this structure makes it possible to transmit the impact load F to the vehicle width direction D2 through the successive face 52 (see Arrow F' in FIG. 5), the frame-side bracket 6 and the side rails 21 on the side opposite to the collision side of the battery-side bracket 5 (e.g. on the left side in the event of a right side collision) can efficiently absorb the impact load F. Consequently, since the deformation of the outer face 52 on the collision side in the battery-side bracket 5 (e.g., the outer face 52 on the right side in the event of a right side collision) is suppressed, and thus, the protectability of the battery pack 4 can be further enhanced in the event of a side collision.

(5) According to the electric truck 3 including the support apparatus 1, the mountability of the on-board device 10 can be ensured and also the protectability of the battery pack 4 in the event of a side collision can be enhanced.

(6) As shown in FIG. 1, according to the electric truck 3 in which the casing 12 provided with the charging opening 11 is mounted on the device mounting unit 9, the charging opening 11 can be easily disposed on the outer side in the vehicle width direction D2 as compared with a case where the casing 12 is mounted on the side rail 21. Thus, even without extending the dedicated bracket for arranging the casing 12 at a predetermined position from side rail 21, it is possible to arrange casing 12 at the predetermined position. Accordingly, the workability of supplying electricity to the charging opening 11 can be ensured while reducing the number of components and simplifying the structure.

(7) According to the electric truck 3 in which the sensor 13 that detects an object being outside in the vehicle width direction D2 is mounted on the device mounting unit 9, the sensor 13 can be easily disposed on the outer side in the vehicle width direction D2 as compared with a case where the sensor 13 is mounted on the side rail 21. This makes it possible to arrange the sensor 13 at a predetermined position without extending a dedicated bracket for arranging the sensor 13 at the predetermined position from the side rail 21. Accordingly, the detection area of the sensor 13 can be appropriately set while reducing the number of components and simplifying the structure.

### [3. Modification]

The configuration of the battery-side bracket 5 described above is exemplary. The battery-side bracket 5 satisfactorily has the opposing face 51 facing the battery side-face 41 and has a shape capable of accommodating the battery pack 4. The battery-side bracket 5 may be formed of components different from the end cross members 7 and the main members 8 described above.

The configuration, the arrangement, and the number of frame-side brackets 6 are not limited to the above example.

As shown by the two-dot chain line in FIG. 5, the device mounting unit 9 may be provided on the lower corner portion 54 among the upper and lower corner portions 54. The on-board device 10 (or its brackets, for example) mounted on such a device mounting unit 9 is arranged on the outer side of the lower corner portion 54 so as to cover the lower corner portion 54. Even with this configuration, since the on-board device 10 can be mounted on the corner portion 54, which has a relatively high rigidity in the battery-side bracket 5 like the above embodiment, it is possible to secure the installing strength of the on-board device 10 to the device mounting unit 9, while simplifying the structure to mount the on-board device 10 on the device mounting unit 9.

The specific structure of the device mounting unit 9 is not limited to the above examples. The device mounting unit 9 may include both a weld bolt 91 and a weld nut 94, or may include a structure except for the weld bolt 91 and a weld nut 94.

The on-board device 10 mounted on the device mounting unit 9 is not limited to the above casing 12 and the sensor 13, and may alternatively be various devices mounted on the electric truck 3. For example, on-board device 10 may include a low-voltage battery (not shown) for accessories of the electric truck 3. Even in cases where the on-board device 10 includes such a low-voltage battery, the support apparatus 1 and the electric truck 3 can ensure the mountability of the on-board device 10 while enhancing the protectability of the battery pack 4 in the event of a side collision, like the above embodiment.

The application of the support apparatus 1 is not limited to the above electric truck 3. The support apparatus 1 is applicable to a variety of vehicles having a ladder frame 2.

### [Explanation of Reference Signs]

- 1: Support apparatus (Support apparatus for a battery pack)
- 2: Ladder frame
- 3: Electric truck (Vehicle)
- 4: Battery pack
- 5: Battery-side bracket
- 6: Frame-side bracket
- 7: End cross member
- 8: Main member
- 9:: Device mounting unit
- 10: On-board device
- 11: Charging opening
- 12: Casing
- 13: Sensor
- 14: Nut
- 15: Bolt
- 21: Side rail
- 22: Cross member
- 31: Front wheel
- 32: Rear wheel
- 41: Battery side-face
- 42: Front face
- 43: Rear face
- 51: Opposing face
- 52: Outer face
- 53: Successive face
- 54: Corner portion
- 55: Hole portion
- 71: Web portion
- 72: Flange portion
- 81: Web portion
- 82: Flange portion
- 91: Weld bolt
- 92: Head portion
- 93: Screw portion
- 94: Weld nut
- F, F': Impact load
- L: Length size of the screw portion of bolt 15
- S: Distance (gap) between the battery side-face 41 and the opposing face 51

## Claims

1. A support apparatus (1) for a battery pack (4) being mounted under side rails (21) constituting a ladder frame (2) of a vehicle and including a pair of side faces (41), the side faces (41) facing outward in a vehicle width direction and being positioned on outsides in the vehicle width direction with respect to the side rails (21), the support apparatus (1) comprising:
a battery-side bracket (5) that includes an opposing face (51) facing the side face (41) and accommodates the battery pack (4); and
a frame-side bracket (6) coupling the battery-side bracket (5) to the side rail (21),
wherein the battery-side bracket (5) comprises a device mounting unit (9) for mounting an on-board device (10) at an outer face (52) opposite to the opposing face (51),
**characterized in that**
in case of a side collision an impact load input from the outside in the vehicle width direction is input into the on-board device (10) before being input into the battery-side bracket (5), whereby an initial input of the impact load is absorbed by the on-board device (10).

2. The support apparatus (1) according to claim 1, wherein the device mounting unit (9) comprises a weld bolt (91) having a head portion (92) being welded to the opposing face (51) and a screw portion (93) protruding from the head portion (92) outward in the vehicle width direction further than the outer face (52).

3. The support apparatus (1) according to claim 1 or 2, wherein the device mounting unit (9) comprises a weld nut (94) welded to the opposing face (51).

4. The support apparatus (1) according to any one of claims 1-3, wherein:
the battery-side bracket (5) comprises a successive face (53) being provided successively to the outer face (52) and forming a corner portion (54) in conjunction with the outer face (52); and
the device mounting unit (9) is formed on the corner portion (54) provided from the outer face (52) to the successive face (53).

5. An electric truck (3) comprising a support apparatus (1) for a battery pack (4) defined in any one of claims 1-4.

6. The electric truck (3) according to claim 5, wherein the on-board device (10) comprises a casing (12) provided with a charging opening (11) for charging the battery pack (4) from outside.

7. The electric truck (3) according to claim 5 or 6, wherein the on-board device (10) comprises a sensor (13) that detects an object being outside in the vehicle width direction.

## Patentansprüche

1. Trägervorrichtung (1) für ein Batteriepack (4), das unter Seitenschienen (21) montiert ist, die einen Leiterrahmen (2) eines Fahrzeugs bilden, und ein Paar von Seitenflächen (41) umfasst, wobei die Seitenflächen (41) in einer Fahrzeugbreitenrichtung auswärts gewandt sind und an Außenseiten in der Fahrzeugbreitenrichtung mit Bezug auf die Seitenschienen (21) positioniert sind, wobei die Trägervorrichtung (1) umfasst:
einen Batterieseitenhalter (5), der eine gegenüberliegende Fläche (51) umfasst, die der Seitenfläche (41) zugewandt ist, und das Batteriepack (4) aufnimmt; und
einen Rahmenseitenhalter (6), der den Batterieseitenhalter (5) mit der Seitenschiene (21) koppelt,
wobei der Batterieseitenhalter (5) eine Einrichtungsmontageeinheit (9) zum Montieren einer Bordeinrichtung (10) an einer äußeren Fläche (52) entgegengesetzt zur gegenüberliegenden Fläche (51) umfasst,
**dadurch gekennzeichnet, dass**
im Fall einer Seitenkollision eine Stoßbelastung, die von der Außenseite in der Fahrzeugbreitenrichtung eingebracht wird, in die Bordeinrichtung (10) eingebracht wird, bevor sie in den Batterieseitenhalter (5) eingebracht wird, wodurch eine anfängliche Einbringung der Stoßbelastung durch die Bordeinrichtung (10) absorbiert wird.

2. Trägervorrichtung (1) nach Anspruch 1, wobei die Einrichtungsmontageeinheit (9) einen Schweißbolzen (91) mit einem Kopfabschnitt (92), der an die gegenüberliegende Fläche (51) geschweißt ist, und einem Schraubenabschnitt (93), der vom Kopfabschnitt (92) in der Fahrzeugbreitenrichtung weiter als die äußere Fläche (52) auswärts vorsteht, umfasst.

3. Trägervorrichtung (1) nach Anspruch 1 oder 2, wobei die Einrichtungsmontageeinheit (9) eine Schweißmutter (94) umfasst, die an die gegenüberliegende Fläche (51) geschweißt ist.

4. Trägervorrichtung (1) nach einem der Ansprüche 1-3, wobei:
der Batterieseitenhalter (5) eine nachfolgende Fläche (53) umfasst, die der äußeren Fläche (52) nachfolgend vorgesehen ist und einen Eckenabschnitt (54) in Verbindung mit der äußeren Fläche (52) bildet; und
die Einrichtungsmontageeinheit (9) am Eckenabschnitt (54) ausgebildet ist, der von der äußeren Fläche (52) zur nachfolgenden Fläche (53) vorgesehen ist.

5. Elektrolastkraftwagen (3) mit einer Trägervorrichtung (1) für ein Batteriepack (4) nach einem der Ansprüche 1-4.

6. Elektrolastkraftwagen (3) nach Anspruch 5, wobei die Bordeinrichtung (10) ein Gehäuse (12) umfasst, das mit einer Ladeöffnung (11) zum Aufladen des Batteriepacks (4) von außen versehen ist.

7. Elektrolastkraftwagen (3) nach Anspruch 5 oder 6, wobei die Bordeinrichtung (10) einen Sensor (13) umfasst, der ein Objekt detektiert, das sich in der Fahrzeugbreitenrichtung außen befindet.

## Revendications

1. Appareil de support (1) pour un bloc-batterie (4) monté sous des longerons (21) constituant un châssis en échelle (2) d'un véhicule et comprenant une paire de faces latérales (41), les faces latérales (41) étant dirigées vers l'extérieur dans une direction de largeur de véhicule et étant positionnées sur des extérieurs dans la direction de largeur de véhicule par rapport aux longerons (21), l'appareil de support (1) comportant :
une ferrure côté batterie (5) qui comprend une face opposée (51) dirigée vers la face latérale (41) et qui reçoit le bloc-batterie (4) ; et
une ferrure côté châssis (6) couplant la ferrure côté batterie (5) au longeron (21),
la ferrure côté batterie (5) comportant une unité de montage de dispositif (9) destinée à monter un dispositif embarqué (10) sur une face extérieure (52) opposée à la face opposée (51),
**caractérisée en ce que**
dans le cas d'une collision latérale, une charge d'impact appliquée depuis l'extérieur dans la direction de largeur de véhicule est appliquée dans le dispositif embarqué (10) avant d'être appliquée dans la ferrure côté batterie (5), en sorte qu'une application initiale de la charge d'impact est absorbée par le dispositif embarqué.

2. Appareil de support (1) selon la revendication 1, dans lequel l'unité de montage de dispositif (9) comporte un boulon de soudure (91) ayant une partie de tête (92) soudée à la face opposée (51) et une partie de vis (93) faisant saillie à partir de la partie de tête (92) vers l'extérieur dans la direction de largeur de véhicule plus loin que la face extérieure (52).

3. Appareil de support (1) selon la revendication 1 ou 2, dans lequel l'unité de montage de dispositif (9) comporte un écrou de soudure (94) soudé à la face opposée (51).

4. Appareil de support (1) selon l'une quelconque des revendications 1 à 3, dans lequel :
la ferrure côté batterie (5) comporte une face successive (53) disposée successivement à la face extérieure (52) et formant une partie de coin (54) conjointement avec la face extérieure (52) ; et
l'unité de montage de dispositif (9) est formée sur la partie de coin (54) disposée de la face extérieure (52) à la face successive (53).

5. Camion électrique (3) comportant un appareil de support (1) pour un bloc-batterie (4) selon l'une quelconque des revendications 1 à 4.

6. Camion électrique (3) selon la revendication 5, dans lequel le dispositif embarqué (10) comporte un boîtier (12) muni d'une ouverture de charge (11) pour charger le bloc-batterie (4) depuis l'extérieur.

7. Camion électrique (3) selon la revendication 5 ou 6, dans lequel le dispositif embarqué (10) comporte un capteur (13) qui détecte un objet situé à l'extérieur dans la direction de largeur de véhicule.
